# EUROPEAN PATENT APPLICATION

(11) **EP 4 700 619 A1**
(43) Date of publication of application: **25.02.2026**
(21) Application number: 24195679.6
(22) Date of filing: 21.08.2024
(51) Int. Cl.: G06F 21/46, G06N 3/08

(54) **METHOD, COMPUTER PROGRAM PRODUCT AND NETWORK CONTROL DEVICE FOR DETERMINING SECURITY OF A PASSWORD-USING DEVICE OR IN A PASSWORD-USING NETWORK**

(71) Applicant: Siemens Aktiengesellschaft, 80333 München (DE)
(72) Inventor: Lukas, Klaus, 81739 München (DE); Zwanzger, Johannes, 85579 Neubiberg (DE); Rocha De Oliveira, Mariana Adelaide, 2720-093 Amdora (PT)
(74) Representative: Siemens Patent Attorneys

(57) **Abstract**

Method, computer program product and network control device for determining security of a password-using device or in a password-using network.

A method for determining security in a password-using network is provided. The method includes determining the proximity of a password of the password-using network to contextual information of the network or constituents of the network. The method may further comprise determining security measures dependent on the determined proximity. The proximity determination may involve setting or evaluating the proximity, while determining security may involve setting or evaluating the security. Security enhancing measures may be chosen based on the determined proximity. These measures can include providing user feedback about password proximity and receiving password updates, or prohibiting or granting network access. The method may attribute the chosen password to a particular device or group of devices within the network. Proximity evaluation can utilize machine learning, fuzzy measurement methods, entropy measures, or compression algorithms.

## Description

The invention relates to a method for determining security of a password-using device or in a password-using network and to a computer program product and a network control device for determining security in a password-using network.

Passwords play a crucial role in securing access to networks, devices, and sensitive information in modern computing environments. As the complexity and scale of networked systems continue to grow, so does the importance of implementing robust password policies and practices.

In many organizations, particularly those with numerous devices or users, there is a tendency to use simple, easily remembered passwords or to reuse the same password across multiple systems. This approach, while convenient, significantly compromises security by making it easier for unauthorized parties to gain access to protected resources.

To address this security risk, it is generally recommended to use unique, complex passwords for each device or user account. However, implementing this best practice often proves challenging in real-world scenarios. Users may struggle to remember multiple complex passwords, leading to practices such as writing them down or storing them insecurely, which can negate the intended security benefits.

One common approach to balancing security and usability is to derive passwords from readily available information about the device or user. For example, a password might incorporate elements such as device names, serial numbers, or user-specific data. While this method can result in passwords that meet complexity requirements and are easier for legitimate users to recall, it also introduces potential vulnerabilities if an attacker can deduce or obtain the underlying information used to generate the passwords.

Assessing the strength and security of passwords in large-scale environments presents additional challenges. Traditional methods of password strength evaluation often focus on factors such as length, character diversity, and resistance to dictionary attacks. However, these approaches may not adequately account for the relationship between passwords and contextual information specific to the device or to the network, or its users.

As devices, networks and systems evolve, there is an ongoing need for improved methods of creating, evaluating, and managing passwords that can effectively balance security requirements with usability considerations. Addressing these challenges requires innovative approaches that can adapt to the specific context of device environment or each network environment while maintaining robust protection against unauthorized access.

### SUMMARY OF INVENTION

Given these issues in the state of the art, it is the problem of the invention to provide an improved method and an improved computer program product and an improved network control device for determining the security in a password-using device or network.

This problem of the invention is solved with a method for determining security of a device or security in a password-using network having the features claimed in claim 1 and with a computer program product having the features claimed in claim 12 and with a network control device having the features claimed in claim 13. Further advantageous aspects of the invention are contained in the respective dependent claims and are explained in the following description and the attached drawings.

The method according to the invention is a method for determining security of a password-using device or determining security in a password-using network. The method according to the invention includes determining the proximity of a password of the password-using device or the password-using network to a contextual information of the device or the network or constituents of the network, respectively. In other words, the method according to the invention includes determining the proximity of a password of the password-using device to a contextual information of the device or a network, the device is connected to or to constituents of the network, the device is connected to. Alternatively, or additionally, the method according to the invention includes determining the proximity of a password in a password-using network to a contextual information of the network or constituents of the network. The invention advantageously provides a more nuanced and context-aware approach to password security assessment, potentially identifying vulnerabilities that traditional methods might overlook.

The present invention provides a method for enhancing password security devices, particularly in networked environments and for enhancing passwords in networked environments. This method addresses the challenge of maintaining robust password security while preferably also considering the usability needs of users. The method involves determining the proximity of a password to contextual information of the device or within the network or its constituents, respectively. This contextual information may include, but is not limited to, device names, user accounts, domain names, computer names, user-specific data such as first or last names, department information, product names, customer names and/or other passwords already in use for the password-using device or the password-using network, respectively. Avoiding that identical or similar passwords are used across several applications of devices or across several devices within a network may be an important case to detect.

The method preferably includes determining security measures based on the determined proximity. These security measures may be dynamic and adaptive, providing flexibility to tailor the method to specific device environments or network environments and security requirements. The method may also include choosing security measures dependent on the determined proximity. These security measures may include providing user feedback about the proximity of a password and receiving an update of the password, or prohibiting or granting access to the device that is using the password or the network that is using the password, particularly for a device of the network the password is attributed to.

The method may also involve evaluating the proximity using advanced computational techniques such as machine learning, in particular neural networks, and/or fuzzy measurement methods. In preferred aspects of the invention, the proximity may be evaluated using entropy measures, particularly the Shannon entropy, or compression algorithms, particularly Huffman encoding or LZW compression.

The present invention also provides a computer program product configured to carry out the method when executed on a computer, and a network control device comprising the computer program product. The computer program product may be contained in a protected environment, enhancing the security of the system itself.

According to other aspects of the present disclosure, the method may include one or more of the following features:
According to a preferred aspect of the invention, the method may comprise the step of determining security measures dependent on the determined proximity. This feature may advantageously allow for dynamic and adaptive security measures based on the specific context of each password.

Advantageously in the present invention, determining the proximity may mean setting the proximity and determining security may mean setting the security. The method according to the invention may preferably include generating the password with the set proximity and transferring the password after it has been generated to the user and/or to an access system. Alternatively, determining the proximity may mean evaluating the proximity and determining security may mean evaluating the security. The method may in this alternative involve receiving a password from a user as a very first step. Then, the proximity may be evaluated. In principle, both alternatives may even be combined, first receiving the password from a user, then evaluating its proximity and in case the proximity is to high, a better password with lower proximity may be generated. These alternatives may advantageously provide flexibility in implementation, allowing the method to be tailored to specific device environments or network environments, respectively, and security requirements.

In case determining means evaluating as described previously, in an advantageous aspect of the invention, the method may include choosing security measures dependent on the determined proximity. This feature may advantageously enable targeted and efficient security improvements based on identified vulnerabilities.

The security measures may, in an advantageous aspect of the invention, comprise giving a user feedback about the proximity of a password and receiving an update of the password. This aspect of the invention may advantageously improve user awareness and encourage the creation of stronger passwords by the user while maintaining usability.

In a preferred aspect of the method according to the invention, the security measures may comprise prohibiting or granting access to the device that uses the password or the network respectively, in particular for a device of the network the password is attributed to. This feature may advantageously provide an immediate and effective response to identified security risks.

Preferably, in the case of the password-using network, the password may be attributed to a particular device or a particular group of devices of the password-using network. This aspect may advantageously allow for more granular control over password policies and security measures across different parts of the network.

In a preferred aspect of the method according to the invention, the proximity may be evaluated using machine learning, in particular neural networks, and/or fuzzy measurement methods. This feature may advantageously leverage advanced computational techniques to improve the accuracy and effectiveness of password security assessment.

Alternatively, or additionally and advantageously in the method according to the invention, the proximity may be evaluated using entropy measures, in particular the Shannon entropy. This aspect may advantageously provide a quantitative measure of password strength that takes into account the relationship between the password and contextual information.

The proximity may be evaluated using compression algorithms, in particular Huffman encoding or LZW compression. This feature may advantageously offer an alternative approach to assessing password strength that considers the information content of the password in relation to contextual data.

The computer program product according to the invention is configured to carry out the method according to the invention as described previously when carried out on a computer. The computer program product according to the invention may advantageously enable widespread implementation of the security assessment and enhancement method across various computing environments.

The network control according to the invention comprises a computer program product configured to carry out the method according to the invention as described above. The network control device according to the invention may advantageously facilitate centralized management and enforcement of password security policies across a network.

Preferably, the computer program product may be contained in a protected environment. This aspect may advantageously enhance the security of the security assessment and enhancement system itself, protecting it from potential tampering or unauthorized access.

The invention is further described with the help of the attached drawing.

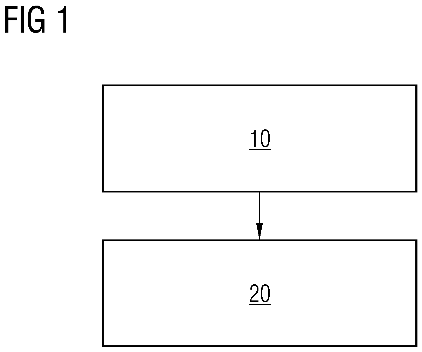

FIG. 1 illustrates a flowchart for evaluating password security within a network, according to aspects of the present disclosure.

In summary, the embodiment of the method according to the invention shown in Fig. 1 provides a method for enhancing password security in networked environments by considering the proximity of a password to contextual information within the network or its constituents, and by determining security measures based on this proximity. This method offers a more nuanced and context-aware approach to password security assessment, potentially identifying vulnerabilities that traditional methods might overlook, and providing targeted and efficient security improvements based on identified vulnerabilities.

Referring to FIG 1, the method begins with a step of determining 10 the proximity of a password to the contextual information of the network or its constituents. In some cases, this involves analyzing how closely the password is related to easily accessible or guessable information associated with the network, such as user names, network names, or other identifiable data. This proximity determination is performed using one or more of various computational techniques, such as machine learning algorithms, fuzzy measurement methods, entropy measures, or compression algorithms.

Following the determination of password proximity, the method proceeds to assess the security of the password-using network based on the determined proximity. In some aspects, this involves evaluating whether the closeness of the password to contextual information compromises the security of the network, and to what extent. The security assessment may be performed using various criteria, such as the strength of the password, the complexity of the network, the sensitivity of the data protected by the password, among others.

In some cases, the method includes setting the proximity and setting the security. This may involve assigning numerical values or other quantifiable measures to the proximity and security, which can be used to facilitate further analysis and decision-making.

The method shown in Fig. 1 optionally involves the step of choosing 20 security measures dependent on the determined proximity. In some embodiments, these security measures may include providing user feedback about the proximity of a password and receiving an update of the password. This feedback may be presented in various forms, such as a numerical score, a color-coded indicator, a textual message, among others. The feedback may also include suggestions for improving the password, such as increasing its length, adding special characters, avoiding common words, among others, and thus decreasing the proximity.

In the depicted embodiments, the method may involve prohibiting or granting access to the network, particularly for a device of the network the password is attributed to, based on the determined proximity and security. This may involve blocking access to the network for devices with passwords that are too closely related to the contextual information, or granting access to devices with passwords that are sufficiently unrelated to the contextual information. This feature may enhance the security of the network by preventing unauthorized access based on easily guessable or easily derivable passwords.

In the depicted embodiments, the respective password is attributed to a particular device or a group of devices within the password-using network. Thus, the method may provide a more granular control over network security.

The method may also involve evaluating the proximity using advanced computational techniques. In some cases, machine learning, particularly neural networks, may be used to determine the proximity. Neural networks can learn and adapt to patterns in the data, which may enable them to accurately assess the proximity of a password to the contextual information, even as the network evolves over time.

In some embodiments such as the depicted embodiment, fuzzy measurement methods may also be used to evaluate the proximity. Fuzzy measurement methods can handle uncertainty and vagueness in the data, which may be beneficial in situations where the contextual information is not clearly defined or changes frequently.

In some embodiments such as the depicted embodiment, the proximity may be evaluated using entropy measures, particularly the Shannon entropy. The Shannon entropy is a measure of the uncertainty or randomness in a set of data. By applying the Shannon entropy to the password and the contextual information, the method may be able to quantify the randomness of the password in relation to the contextual information, which may provide a more objective assessment of the password's security.

In some embodiments such as the depicted embodiment, compression algorithms, particularly Huffman encoding or LZW compression, may be used to evaluate the proximity. Compression algorithms work by removing redundancy in the data, which can be a measure of the data's predictability. By applying compression algorithms to the password and the contextual information, the method may be able to assess the predictability of the password in relation to the contextual information, which may provide a more nuanced understanding of the password's security.

Referring to FIG 1, the method may be implemented through a computer program product configured to carry out the method when executed on a computer. In some cases, the computer program product may include a set of instructions that, when executed by a processor of a computer, cause the computer to perform the method. The instructions may be stored on a non-transitory computer-readable medium, such as a hard drive, a solid-state drive, a flash memory, a read-only memory (ROM), a random-access memory (RAM), or any other type of storage medium, device, or carrier that can store or transmit the instructions.

In some embodiments such as the depicted embodiment, the computer program product may be configured to determine the proximity of a password to the contextual information of the network or its constituents, determine security measures based on the determined proximity, and choose security measures dependent on the determined proximity. The computer program product may also be configured to evaluate the proximity using machine learning, entropy measures, or compression algorithms, and to attribute the chosen password to a particular device or a group of devices within the password-using network.

In some embodiments such as the depicted embodiment, the method may be implemented through a network control device comprising the computer program product. The network control device may be any type of device capable of controlling access to a network, such as a router, a switch, a firewall, a server, or any other type of network device. The network control device may include a processor configured to execute the instructions of the computer program product, and a memory configured to store the instructions and any data used or generated by the method.

In some embodiments such as the depicted embodiment, the network control device may include a protected environment in which the computer program product is contained. The protected environment may be a secure area of the device's memory that is isolated from other areas of the memory, preventing unauthorized access to the instructions and data of the computer program product. The protected environment may be implemented using various security techniques, such as encryption, access control, hardware security modules, or any other type of security measure. By containing the computer program product in a protected environment, the network control device may enhance the security of the method and the data used or generated by the method.

In some embodiments such as the depicted embodiment, the method may involve extracting information from the environment of the network or its constituents. This information may include, but is not limited to, device names, user accounts, domain names, computer names, first or last names of users, department information, product names, customer names, and other relevant data. This extraction process may be performed using various techniques, such as data mining, web scraping, network sniffing, or any other suitable method.

The extracted environment-based information may be used in various ways to enhance the security of the password-using network. In some cases, the method may involve calculating the proximity of a password to the extracted environment-based information. This calculation may be performed using various techniques, such as string comparison, pattern matching, statistical analysis, machine learning algorithms, or any other suitable method. The calculated proximity may provide an indication of how closely the password is related to the environment-based information, which may be used to assess the security of the password.

In some embodiments such as the depicted embodiment, the method may involve using the structural information of the environment-based information for password creation, without using the content itself. For instance, if the environment-based information is a string of characters with a particular structure, such as a sequence of digits followed by a sequence of letters, the method may involve creating a password with a similar structure, but with different content. This approach may enhance the memorability of the password for the user, while also reducing the likelihood of the password being easily guessed based on the environment-based information.

In some embodiments such as the depicted embodiment, the method may involve creating password proposals that do not correlate to any given environment-based information. These password proposals may be generated using various techniques, such as random number generation, cryptographic algorithms, or any other suitable method. The generated password proposals may be evaluated for their proximity to the environment-based information, and only those proposals with a sufficiently low proximity may be selected. This approach may enhance the security of the password-using network by ensuring that the chosen passwords are not easily guessable based on the environment-based information.

In some embodiments such as the depicted embodiment, the method may involve dynamic training of neural networks incorporating environment-based information. Neural networks are a type of machine learning algorithm that can learn and adapt to patterns in data. By incorporating environment-based information into the training of the neural networks, the method may be able to more accurately assess the proximity of a password to the environment-based information. This dynamic training process may involve updating the weights and biases of the neural network based on the environment-based information and the associated passwords, which may enhance the ability of the neural network to accurately assess the proximity of a password to the environment-based information. The dynamic training of the neural networks may be performed in a protected environment, ensuring that the environment-based information does not leave the secure environment where the passwords are stored.

In some embodiments such as the depicted embodiment, the method may involve regular password checks to detect password changes with environment-based information during operation. These password checks may be performed at regular intervals, such as daily, weekly, monthly, or at any other suitable frequency. The password checks may involve determining the proximity of the current password to the environment-based information and comparing this proximity to a threshold value. If the proximity exceeds the threshold value, indicating that the password is too closely related to the environment-based information, a security alert may be triggered, prompting the user to change the password. This regular monitoring of password changes with environment-based information may enhance the security of the password-using network by ensuring that passwords remain robust and not easily guessable based on the environment-based information.

In other embodiments, the password is rather the password of a device that is a part of the network. In such embodiments, the method may involve prohibiting or granting access to the device the password is attributed to, based on the determined proximity and security. This may involve blocking access to the device with passwords that are too closely related to the contextual information, or granting access to the device with passwords that are sufficiently unrelated to the contextual information. These embodiments may additionally or alternatively propose a password with sufficiently low proximity to the contextual information of the device or the network, the device is part of.

## Claims

1. Method for determining security of a password-using device or in a password-using network, wherein the proximity of a password of the password-using network to a contextual information of the password-using device or the password-using network or constituents of the password-using network, respectively, is determined (10).

2. Method according to one of the preceding claims, comprising the step of determing (20) security measures dependent on the determined (10) proximity.

3. Method according to one of the preceding claims, wherein determining (10) the proximity means setting the proximity and/or determining security measures setting the security and wherein a password is preferably generated according to the set proximity and wherein the password is preferably communicated to a user of the password-using device or the password-using network

4. Method according to one of the preceding claims, wherein determining (10) the proximity means evaluating the proximity and/or determining security measures evaluating the security measures and wherein the method preferably involves receiving the password from a user at first.

5. Method according to one of the preceding claims, wherein security measures are chosen dependent on the determined proximity.

6. Method according to one of the preceding claims, wherein security measures comprise giving a user feedback about the proximity of a password and receiving an update of the password.

7. Method according to one of the preceding claims, wherein security measures comprise prohibiting or granting access to the network, in particular for a device of the password-using network the password is attributed to or comprises prohibiting or granting access to the password-using device the password is attributed to.

8. Method according to one of the preceding claims, in which the password is attributed to a particular device or a particular group of devices of the password-using network. Method according to one of the preceding claims, in which the proximity is evaluated using machine learning, in particular neural networks, and or fuzzy measurement methods.

9. Method according to one of the preceding claims, in which the proximity is evaluated using entropy measures, in particular the Shannon entropy.

10. Method according to one of the preceding claims, in which the proximity is evaluated using compression algorithms, in particular Huffman encoding or LZW compression.

11. Computer program product according to one of the preceding claims, comprising source code that is configured to carry out the method according to one of the preceding claims when carried out on a computer.

12. Network control device comprising a computer program product according to the previous claims and/or configured to carry out the method according to one of the preceding claims.

13. Network control device according to one of the preceding claims, in which the computer program product is contained in a protected environment.
